# EUROPÄISCHE PATENTANMELDUNG

(11) **EP 1 181 971 A2**
(43) Veröffentlichungstag der Anmeldung: **27.02.2002**
(21) Anmeldenummer: 01116084.3
(22) Anmeldetag: 03.07.2001
(51) Int. Cl.: B01D 53/94, B01J 23/46

(54) **Verfahren zur Entstickung von Abgasen vorwiegend mager betriebener Verbrennungsmotoren**

(30) Priorität: 28.07.2000 DE 10036886
(71) Anmelder: DaimlerChrysler AG, 70567 Stuttgart (DE)
(72) Erfinder: Andorf, Renato, Dr. rer.nat., 88090 Immenstaad (DE); Plog, Carsten, Dr. rer. nat., 88677 Markdorf (DE); Schäffner, Guido, Dipl.-Ing (FH), 88263 Horgenzell (DE)

(57) **Zusammenfassung**

Die Erfindung betrifft ein Verfahren zur Entstickung von Abgasen vorwiegend mager betriebener Verbrennungsmotoren umfassend folgende Verfahrensschritte: (a) Plazieren eines stickoxidspeichernden und katalytisch wirkenden Feststoffs frei von Erdalkalimetallen, Alkalimetallen oder Seltenen Erden bestehend aus einer porösen Trägersubstanz sowie auf der porösen Trägersubstanz aufgebrachten Rhodiums, in den Abgasstrang des Verbrennungsmotors, (b) Speicherung der Stickoxide während der mageren Motorbetriebsphase mit einem Luftverhältnis λ>1 und (c) Freisetzung und katalytische Umsetzung der Stickoxide während der fetten Motorbetriebsphase mit einem Luftverhältnis λ<1. Gemäß der Erfindung besteht die poröse Trägersubstanz aus mindestens 50 ma.-% Zirkonoxid, Titanoxid, Siliziumoxid, oder einem Zeolith oder einem Gemisch aus mehreren dieser Verbindungen.

## Beschreibung

Die Erfindung betrifft ein Verfahren zur Entstickung vorwiegend mager betriebener Verbrennungsmotoren nach dem Oberbegriff des Patentanspruchs 1.

Aus EP 0 890 389 A1 ist ein NOx-Speicherkatalysator zur Abgasreinigung von Kraftfahrzeug-Verbrennungsanlagen bekannt. Der offenbarte Speicherkatalysator setzt sich aus zwei Materialkomponenten zusammen, wobei die eine Materialkomponente zur Zwischenspeicherung der Stickoxide im Magerbetrieb des Kraftfahrzeug-Verbrennungsmotors dient und die andere Materialkomponente ein katalytisches Material mit Dreiwege-Eigenschaften ist, an dem während eines kurzzeitig fetten Abgasbetriebes die freigesetzten Stickoxide zu molekularem Stickstoff (N₂) umgesetzt werden.

Das erforderliche Verhältnis der mageren Betriebsphasen zu fetten Betriebsphasen der Verbrennungssteuerung des Kraftfahrzeug-Verbrennungsmotors wird durch verschiedene Parameter wie die NOx-Speicherkapazität des Materials, die anfallende NOx-Menge, die Abgastemperatur und bei schwefelhaltigen Abgasen durch den Schwefelgehalt bestimmt. Um einen niedrigen Kraftstoffverbrauch zu erzielen, werden im Fahrbetrieb des Kraftfahrzeug-Verbrennungsmotors möglichst lange Magerbetriebsphasen und möglichst kurze Fettbetriebsphasen angestrebt. Der NOx-Speicherkatalysator arbeitet somit diskontinuierlich, da die Verbrennungssteuerung des Abgases alternierend von Mager- auf Fettbetrieb umgestellt werden muss.

EP 0 707 882 A1 offenbart einen NOx-Speicherkatalysator mit einem aluminiumoxidhaltigen Trägermaterial, auf welches ein Ti-Zr-Mischoxid aufgebracht ist. Auf das aluminiumoxidhaltige Trägermaterial ist ferner zur Stickoxidspeicherung eine Verbindung aus der Elementegruppe der Alkalimetalle, Erdalkalimetalle oder Seltene Erden aufgebracht. Das aluminiumoxidhaltige Trägermaterial ist weiterhin mit einem Edelmetall, z.B. Palladium (Pd), Platin (Pt) oder Rhodium (Rh) dotiert.

Weitere offenbarte Ausführungen des genannten NOx-Speicherkatalysators weisen ein Trägermaterial aus einem Mischoxid der Elemente Titan (Ti), Zirkon (Zr) und Yttrium (Y) auf. Die verwendeten Alkalimetalle, Erdalkalimetalle oder Seltenen Erden zur Stickoxidspeicherung haben den Nachteil einer geringen Temperaturbeständigkeit sowie geringen SO₂-Verträglichkeit.

Aus EP 0 927 571 A2 ist ein weiterer NOx-Speicherkatalysator, frei von Alkalimetalle, Erdalkalimetalle oder Seltene Erden, mit einem Trägermaterial umfassend mindestens 50 ma.-% Aluminiumoxid, bekannt, welches mit Platin und optional mit Palladium, Rhodium oder deren Verbindungen dotiert ist. Der offenbarte aluminiumoxidhaltige NOx-Speicherkatalysator (Pt/Al₂O₃-Katalysator) absorbiert in der mageren Motorbetriebsphase Stickoxide aus dem Abgas und setzt die Stickoxide in der fetten Motorbetriebsphase bei gleichzeitiger Umsetzung an Platin frei.

Bei dem offenbarten NOx-Speicherkatalysator erweist sich das Verhältnis der mageren Motorbetriebsphase zur fetten Motorbetriebsphase als problematisch. Nur in einem Mager-Fett-Zyklus mit jeweils identischer Dauer einer mageren und fetten Motorbetriebsphase (z.B. 60 Sekunden) läßt sich bei einer Temperatur von 350°C ein maximaler NOx-Umsatz von ca. 65% erzielen. Bei kürzerer Dauer einer fetten Motorbetriebsphase gegenüber einer mageren Motorbetriebsphase wird ein geringerer NOx-Umsatz erzielt.

Aufgabe der Erfindung ist es, ein Verfahren zur Entstickung von Abgasen vorwiegend mager betriebener Verbrennungsmotoren zu schaffen, das auch bei sehr kurzen fetten Motorbetriebsphasen eine gute Effizienz aufweist.

Diese Aufgabe wird mit dem Gegenstand des Patentanspruchs 1 gelöst. Weitere vorteilhafte Ausführungen des erfindungsgemäßen Verfahrens sind Gegenstand von weiteren Ansprüchen.

In dem erfindungsgemäßen Verfahren besteht die poröse Trägersubstanz aus mindestens 50 ma.-% Zirkonoxid, Titanoxid, Siliziumoxid, oder einem Zeolith oder einem Gemisch aus mehreren dieser Verbindungen.

Die BET-Oberfläche der genannten Trägersubstanzen liegt dabei insbesondere zwischen 10 und 500 m²/g. Die Rhodiumkonzentration auf den genannten Trägermaterialien beträgt vorzugsweise 0,1 bis 2 ma.-%, kann aber zur gezielten Veränderung der Feststoffeigenschaften entsprechend erhöht oder vermindert werden.

Zur Verbesserung der stickoxidspeichernden und katalytischen Eigenschaften des Verfahrens kann zusätzlich eines oder mehrere Edelmetalle, z.B. Platin, Iridium oder Palladium auf die poröse Trägersubstanz aufgebracht werden. Dadurch wird die Aktivität des Materials deutlich erhöht.

In einer vorteilhaften Ausführung des erfindungsgemäßen Verfahrens kann der stickoxidspeichernde und katalytisch wirkende Feststoff entsprechend der Anwendung in unterschiedlicher Formgebung, z.B. Pellet, Extrudat eingesetzt werden. Der in dem erfindungsgemäßen Verfahren eingesetzte Feststoff kann aber auch vorteilhaft auf einem geometrischen, z.B. aus Metall oder Keramik gefertigter Träger aufgebracht werden.

Die beiden, auf der porösen Trägersubstanz aufgebrachten, Edelmetalle (Rhodium + zusätzliches Edelmetall) können in dem erfindungsgemäßen Verfahren dabei folgendermaßen kombiniert werden:
- Mikromischung
   Beide Edelmetalle liegen als atomare Mischung auf derselben porösen Trägersubstanz vor, welche ihrerseits auf einem geometrischen Träger aufgebracht ist.
- Makromischung
   Beide Edelmetallkomponenten liegen jeweils einzeln auf getrennten porösen Trägermaterialien vor, wobei die Trägermaterialien gleichen oder unterschiedlichen Typs sein können. Die jeweils mit einem Edelmetall dotierten Trägersubstanzen sind als Pulvermischung auf einem geometrischen Träger aufgebracht.
- Schichtanordnung
   Beide Edelmetallkomponenten liegen jeweils einzeln, in Schichten angeordnet auf porösen Trägersubstanzen vor, welche ihrerseits auf einem geometrischen Träger angeordnet sind.
- Strukturierte Anordnung
   Beide Edelmetallkomponenten befinden sich jeweils einzeln auf porösen Trägersubstanzen, die jeweils getrennt voneinander auf unterschiedlichen geometrischen Trägern, z.B. in serieller Anordnung aufgebracht sind.

Das erfindungsgemäße Verfahren eignet sich insbesondere zum Einsatz in Kraftfahrzeugmotoren, insbesondere Dieselmotoren, stöchiometrisch und mager betriebene Ottomotoren sowie Gasmotoren.

Die Erfindung wird im folgenden anhand von experimentellen Ergebnissen unter Bezugnahme auf Figuren näher erläutert. Sie zeigen:
- Fig. 1: den temperaturabhängigen NOx-Umsatz eines erfindungsgemäßen Pt/Rh/ZrO₂-Feststoffs im λ-Wechselbetrieb,
- Fig. 2: den zeitlichen Verlauf der NOx-Konzentration nach dem erfindungsgemäßen Pt/Rh/ZrO₂-Feststoff bei T=280°C im λ-Wechselbetrieb.

Während der Experimente wurde abwechselnd eine magere Betriebsphase von 90 Sekunden und eine fette Betriebsphase von 4 Sekunden eingestellt. Das Reaktionsgas hatte dabei im mageren und fetten Betriebszustand folgende Zusammensetzung:

| | Mager (λ=2,4) | Fett (λ=0,7) |
|---|---|---|
| NO | 280 Vol.-ppm | 280 Vol.-ppm |
| O₂ | 12,5 Vol.-% | 0 Vol.-% |
| CO | 0,25 Vol.-% | 9,3 Vol.-% |
| H₂ | 1500 Vol.-ppm | 2,6 Vol.-% |
| Propen | 75 Vol.-ppm | 2700 Vol.-ppm |
| CO₂ | 10 Vol.-% | 10 Vol.-% |
| H₂O | 10 Vol.-% | 10 Vol.-% |
| N₂ | Rest | Rest |

Die Raumgeschwindigkeit betrug in beiden Betriebsphasen 20000 1/h.

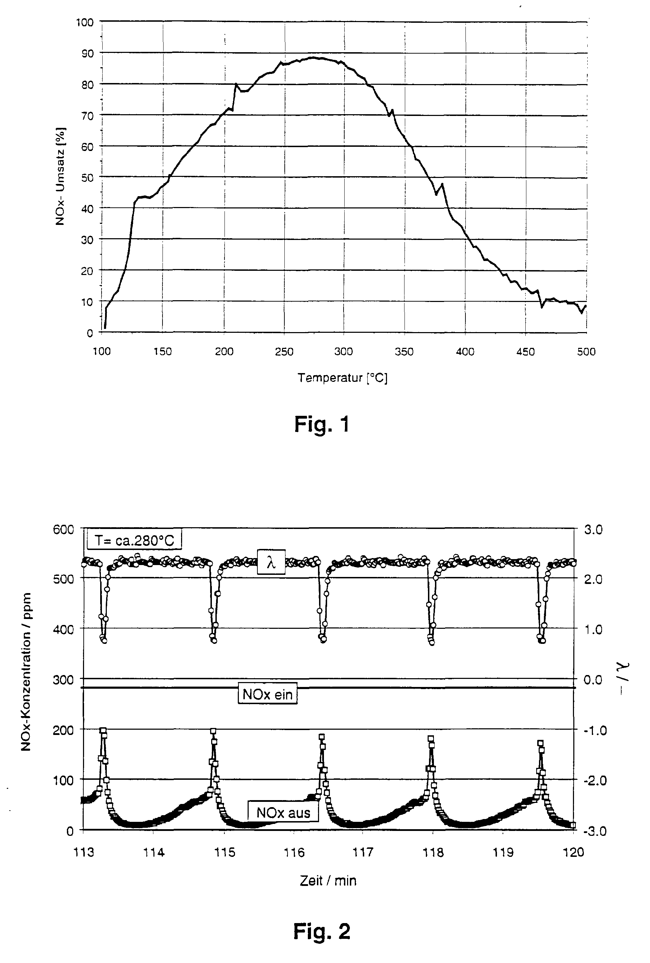

Fig. 1 zeigt im λ-Wechselbetrieb des Reaktionsgases für einen beispielhaften Pt/Rh/ZrO₂-Katalysator mit 1,5 ma.-% Pt und 0,5 ma.-% Rh auf mikroporösem Zirkonoxid in Abhängigkeit der Temperatur (vor Katalysator) den NOx-Umsatz des Katalysators. Der Katalysator wurde in synthetischem Abgas alternierend 90 s mager und 4 s fett betrieben. Simultan dazu wurde ein Temperaturprogramm von 100°C bis 500°C mit einer Temperaturrampe von 2 °C/min durchlaufen. Aus der Differenz der dem Katalysator zugeführten Stickoxidmenge zu der aus dem Katalysator austretenden Menge kann pro durchgelaufenen Mager-Fett-Zyklus ein integraler NOx-Umsatz ermittelt werden.

Bei dem vorliegenden Katalysator ist im Temperaturbereich zwischen 100°C und 500°C ein NOx-Umsatzmaxima zu beobachten. Dieses Maximum liegt bei einer Temperatur von ca. 280°C und beträgt ca. 90 %. Somit wird bei dem vorliegenden Pt/Rh/ZrO₂-Katalysator in einem weiten Temperaturbereich (160°C - 370°C) ein NOx-Umsatz von mindestens 50 % erzielt.

In Fig. 2 ist für den in Fig. 1 beschriebenen PVRh/ZrO₂-Katalysator beispielhaft bei T=280°C, die Temperatur des größten NOx-Umsatzes, der zeitliche Verlauf der NOx-Konzentration, gemessen im λ-Wechselbetrieb des Reaktionsgases nach NOx-Speichermaterial, gezeigt. Die NOx-Eingangskonzentration beträgt für dieses Experiment 280 ppm. In Fig. 2 ist auf der linken Ordinate die NOx-Konzentration in ppm und auf der rechten Ordinate das λ-Signal dargestellt. Die obere Kurve zeigt den Verlauf des λ-Signals, die untere Kurve den entsprechenden zeitlichen Verlauf der NOx-Konzentration. Hieraus sind entsprechend des dargestellten λ-Signals vor dem NOx-Speichermaterial die mageren Betriebsphasen (λ= 2,4) und die fetten Betriebsphasen (λ= 0,7) zuzuordnen.

Während der mageren Betriebsphase wird eine Stickoxidspeicherung festgestellt, wobei aufgrund zunehmender Beladung des stickoxidspeichernden Feststoffs die NOx-Konzentration nach Katalysator langsam ansteigt. Dabei beträgt die NOx-Konzentration zu Beginn einer mageren Betriebsphase (Zeitpunkt bei dem im λ-Wechselbetrieb λ den Wert 2,4 erreicht), z.B. bei ca. 113,3 min, ca. 10 ppm und steigt zum Ende der mageren Betriebsphase, entsprechend bei ca. 114,8 min, nach 90 s auf ca. 80 ppm. Die anschließend fette Betriebsphase von ca. 4 s führt zu einem kurzzeitigen NOx-Konzentrationspeak mit einem Maximum bei ca. 200 ppm, welches deutlich unterhalb der NOx-Eingangskonzentration liegt.

Hierbei wird das an dem NOx-Speichermaterial gebundene Stickoxid freigesetzt. Ein erneuter Wechsel in den mageren Betrieb führt dann zu einer Absenkung der NOx-Konzentration auf ca. 10 ppm und der Zyklus der NOx-Speicherung und NOx-Freisetzung wiederholt sich. Dabei wird pro Zyklus mit dem Pt/Rh/ZrO₂-Katalysator ein integraler Stickoxidumsatz von ca. 90 % erzielt.

## Patentansprüche

1. Verfahren zur Entstickung von Abgasen vorwiegend mager betriebener Verbrennungsmotoren umfassend folgende Verfahrensschritte:
• Plazieren eines stickoxidspeichernden und katalytisch wirkenden Feststoffs der frei von Erdalkalimetallen, Alkalimetallen oder Seltenen Erden ist, enthaltend
(a) eine poröse Trägersubstanz und
(b) Rhodium, das auf der porösen Trägersubstanz aufgebracht ist,
in den Abgasstrang des Verbrennungsmotors,
• Speicherung der Stickoxide während der mageren Motorbetriebsphase mit einem Luftverhältnis λ>1,
• Freisetzung und katalytische Umsetzung der Stickoxide während der fetten Motorbetriebsphase mit einem Luftverhältnis λ<1,
**dadurch gekennzeichnet, dass** die poröse Trägersubstanz aus mindestens 50 ma.-% Zirkonoxid, Titanoxid, Siliziumoxid, oder einem Zeolith oder einem Gemisch aus mehreren dieser Verbindungen besteht.

2. Verfahren nach Anspruch 1, **dadurch gekennzeichnet, dass** ein zweites Edelmetall, z.B. Pt, Pd, Ir oder ein Gemisch von Edelmetallen auf der porösen Trägersubstanz aufgebracht ist.

3. Verfahren nach einem der vorangehenden Ansprüche, **dadurch gekennzeichnet, dass** der Feststoff als Pellet oder Extrudat ausgebildet oder auf einem geometrischen Träger aufgebracht ist.

4. Verfahren nach einem der vorangehenden Ansprüche, **dadurch gekennzeichnet, dass** die Edelmetalle als atomare Mischung auf der porösen Trägersubstanz vorliegen.

5. Verfahren nach einem der vorangehenden Ansprüche, **dadurch gekennzeichnet, dass** die Edelmetalle jeweils einzeln auf gleichen oder unterschiedlichen porösen Trägersubstanzen vorliegen.

6. Verfahren nach Anspruch 5, **dadurch gekennzeichnet, dass** die jeweils einzeln, auf gleichen oder unterschiedlichen porösen Trägersubstanzen aufgebrachten Edelmetalle als Pulvermischung vorliegen.

7. Verfahren nach Anspruch 5, **dadurch gekennzeichnet, dass** die jeweils einzeln, auf gleichen oder unterschiedlichen porösen Trägersubstanzen aufgebrachten Edelmetalle in Schichten angeordnet auf einem geometrischen Träger angeordnet sind.

8. Verfahren nach Anspruch 6, **dadurch gekennzeichnet, dass** die jeweils einzeln, auf gleichen oder unterschiedlichen porösen Trägersubstanzen aufgebrachten Edelmetalle getrennt voneinander auf verschiedenen, z.B. seriell angeordneten, geometrischen Trägern vorliegen.
